# EUROPEAN PATENT APPLICATION

(11) **EP 4 567 400 A1**
(43) Date of publication of application: **11.06.2025**
(21) Application number: 23849983.4
(22) Date of filing: 26.07.2023
(51) Int. Cl.: G01M 11/00, G02B 6/00

(54) **OPTICAL FIBER MANUFACTURING METHOD AND OPTICAL FIBER REWINDING MACHINE**

(30) Priority: 03.08.2022 JP 2022123778
(71) Applicant: SUMITOMO ELECTRIC INDUSTRIES, LTD., Osaka-shi, Osaka 541-0041 (JP)
(72) Inventor: ISHIZEKI, Shuta, Osaka-shi, Osaka 541-0041 (JP); NAKAHARA, Shinji, Osaka-shi, Osaka 541-0041 (JP)
(74) Representative: TBK
(86) International application number: PCT/JP2023/027456
(87) International publication number: WO 2024/029428

(57) **Abstract**

Provided is an optical fiber manufacturing method provided with a fiber connection step for connecting a first optical fiber that is wound on a first bobbin and a second optical fiber that is wound on a second bobbin and producing a single third optical fiber, a fiber winding step for winding the third optical fiber onto the second bobbin through use of an optical fiber rewinding machine, and a screening step for feeding the third optical fiber from the second bobbin through use of the optical fiber rewinding machine and winding the third optical fiber onto the third bobbin while performing screening of the third optical fiber.

## Description

### TECHNICAL FIELD

The present disclosure relates to an optical fiber manufacturing method and an optical fiber rewinding machine.

The present application claims priority based on Japanese Patent Application No. 2022-123778 filed on August 3, 2022, and incorporates all contents described in the Japanese Application.

### BACKGROUND ART

As an optical fiber manufacturing method of one optical fiber by splicing two optical fibers in the related art, there is known an optical fiber splicing method in which coating layers are partially removed to expose optical fibers, the exposed two optical fibers are subject to fusion splicing to form an optical fiber splicing portion of the coating layers, the optical fiber splicing portion is disposed in a prescribed mold, and a resin is dropped on one of the coating layers (for example, see Patent Literature 1).

### CITATION LIST

### PATENT LITERATURE

Patent Literature 1: JP2017-49400A

### SUMMARY OF INVENTION

### SOLUTION TO PROBLEM

According to the present disclosure, an optical fiber manufacturing method includes a fiber splicing step of splicing a first optical fiber wound around a first bobbin and a second optical fiber wound around a second bobbin to produce a third optical fiber; a fiber winding step of winding the third optical fiber around the second bobbin, in an optical fiber rewinding machine; and a screening step of feeding the third optical fiber from the second bobbin by the optical fiber rewinding machine, screening the third optical fiber, and winding the third optical fiber around a third bobbin, in an optical fiber rewinding machine.

According to the present disclosure, another optical fiber manufacturing method includes a fiber splicing step of splicing a first optical fiber wound around a first bobbin and a second optical fiber wound around a second bobbin to produce a third optical fiber; and a screening step of feeding the third optical fiber from the first bobbin, screening the third optical fiber, and winding the third optical fiber around the second bobbin.

According to the present disclosure, an optical fiber rewinding machine for winding, around a second bobbin, a third optical fiber obtained by splicing a screened first optical fiber wound around a first bobbin and a screened second optical fiber wound around the second bobbin, the optical fiber rewinding machine includes a first bobbin mounting shaft to which the first bobbin is configured to be mounted; a second bobbin mounting shaft to which the second bobbin is configured to be mounted; a first capstan provided on a path line of the third optical fiber, the path line being formed between the first bobbin mounting shaft and the second bobbin mounting shaft; and a second capstan provided on the path line and downstream of the first capstan.

"Screening" used here refers to a "proof test (screening test) in which a prescribed tension is applied to a portion of a path line to break and remove a weak part in order to ensure a lifespan of an optical fiber before breakage".

### BRIEF DESCRIPTION OF DRAWINGS

[FIG. 1] FIG. 1 is a schematic diagram of an optical fiber manufacturing apparatus according to a first embodiment of the present disclosure.
[FIG. 2A] FIG. 2A illustrates an optical fiber splicing machine in FIG. 1 and a fiber splicing step by the optical fiber splicing machine.
[FIG. 2B] FIG. 2B illustrates an optical fiber rewinding machine in FIG. 1 and an optical fiber screening step by the optical fiber rewinding machine.
[FIG. 3] FIG. 3 is a schematic diagram of an optical fiber manufacturing apparatus according to a second embodiment of the present disclosure.
[FIG. 4] FIG. 4 is a schematic view of an optical fiber rewinding machine according to the second embodiment of the present disclosure.
[FIG. 5A] FIG. 5A illustrates a procedure of suspending an optical fiber on the optical fiber rewinding machine in FIG. 4.
[FIG. 5B] FIG. 5B illustrates a procedure of suspending the optical fiber on the optical fiber rewinding machine in FIG. 4.
[FIG. 5C] FIG. 5C illustrates a procedure of suspending the optical fiber on the optical fiber rewinding machine in FIG. 4.
[FIG. 5D] FIG. 5D illustrates a procedure of suspending the optical fiber on the optical fiber rewinding machine in FIG. 4.
[FIG. 5E] FIG. 5E illustrates a procedure of suspending the optical fiber on the optical fiber rewinding machine in FIG. 4.
[FIG. 5F] FIG. 5F illustrates a procedure of suspending the optical fiber on the optical fiber rewinding machine in FIG. 4.
[FIG. 6] FIG. 6 illustrates a fiber reverse running step.

### DESCRIPTION OF EMBODIMENTS

### Technical Problem

One optical fiber obtained by splicing two optical fibers in this way may be rewound around a bobbin, and the two optical fibers may not be sufficiently spliced or a defect may occur in the optical fiber when being rewound around the bobbin.

For this reason, it is necessary to screen the spliced optical fiber over an entire length thereof with another facility after the rewinding, which is troublesome.

Therefore, the present disclosure is to solve the problem in the related art as described above, that is, an object of the present disclosure is to provide an optical fiber manufacturing method and an optical fiber rewinding machine that efficiently detect a defect of a third optical fiber obtained by splicing a first optical fiber and a second optical fiber.

### Advantageous Effects of Present Disclosure

According to the above, it is possible to efficiently detect a defect of a third optical fiber obtained by splicing a first optical fiber and a second optical fiber.

### Description of Embodiments of Present Disclosure

First, contents of aspects of the present disclosure will be listed and described.

According to the present disclosure, (1) an optical fiber manufacturing method includes a fiber splicing step of splicing a first optical fiber wound around a first bobbin and a second optical fiber wound around a second bobbin to produce a third optical fiber; a fiber winding step of winding the third optical fiber around the second bobbin by an optical fiber rewinding machine; and a screening step of feeding the third optical fiber from the second bobbin, in the optical fiber rewinding machine, screening the third optical fiber, and winding the third optical fiber around a third bobbin, in the optical fiber rewinding machine.

In this manner, the third optical fiber obtained by splicing the first optical fiber and the second optical fiber is screened by the fiber splicing step of splicing the first optical fiber wound around the first bobbin and the second optical fiber wound around the second bobbin to produce the third optical fiber, the fiber winding step of winding the third optical fiber around the second bobbin by the optical fiber rewinding machine, and the screening step of feeding the third optical fiber from the second bobbin by the optical fiber rewinding machine, screening the third optical fiber, and winding the third optical fiber around the third bobbin, and thereby. Accordingly, it is possible to efficiently detect a defect of the third optical fiber obtained by splicing the first optical fiber and the second optical fiber.

According to the present disclosure, (2) another optical fiber manufacturing method of manufacturing a third optical fiber from a screened first optical fiber wound around a first bobbin and a screened second optical fiber wound around a second bobbin includes: a fiber splicing step of splicing the first optical fiber wound around the first bobbin and the second optical fiber wound around the second bobbin to produce the third optical fiber; and a screening step of feeding the third optical fiber from the first bobbin, screening the third optical fiber, and winding the third optical fiber around the second bobbin.

In this manner, the third optical fiber obtained by splicing the first optical fiber and the second optical fiber is screened by the fiber splicing step of splicing the first optical fiber wound around the first bobbin and the second optical fiber wound around the second bobbin to produce the third optical fiber, and the screening step of feeding the third optical fiber from the first bobbin, screening the third optical fiber, and winding the third optical fiber around the second bobbin. Accordingly, it is possible to efficiently detect a defect of the third optical fiber obtained by splicing the first optical fiber and the second optical fiber.

(3) The above optical fiber manufacturing method further includes a fiber reverse running step of winding the third optical fiber around the first bobbin after the fiber splicing step and before the screening step.

Accordingly, a screening range for the third optical fiber is widened, and thus a defect of the third optical fiber can be more easily detected.

(4) In the fiber reverse running step in the above optical fiber manufacturing method, the third optical fiber is wound around the first bobbin until a splicing portion of the first optical fiber and the second optical fiber is located closer to the first bobbin than to a section in which screening is executed.

Accordingly, the splicing portion of the first optical fiber and the second optical fiber, which is most likely to be a defective portion, is always screened, and thus a defect of the third optical fiber can be reliably detected.

According to the present disclosure, (5) an optical fiber rewinding machine for winding, around a second bobbin, a third optical fiber obtained by splicing a screened first optical fiber wound around a first bobbin and a screened second optical fiber wound around the second bobbin, the optical fiber rewinding machine includes a first bobbin mounting shaft to which the first bobbin is configured to be mounted; a second bobbin mounting shaft to which the second bobbin is configured to be mounted; a first capstan provided on a path line of the third optical fiber, the path line being formed between the first bobbin mounting shaft and the second bobbin mounting shaft; and a second capstan provided on the path line and downstream of the first capstan.

In this manner, by providing the first capstan provided on the path line of the third optical fiber formed between the first bobbin mounting shaft and the second bobbin mounting shaft, and the second capstan provided downstream of the first capstan on the path line, the third optical fiber obtained by splicing the first optical fiber and the second optical fiber is screened by being applied with the prescribed tension between the first capstan and the second capstan, and thus the defect of the third optical fiber obtained by splicing the first optical fiber and the second optical fiber can be detected.

Further, a screening roller that changes a traveling direction of the third optical fiber may be provided between the first capstan and the second capstan on the path line.

(6) The above optical fiber rewinding machine further includes an unevenness detection unit provided downstream of the second capstan and configured to detect an uneven shape on a surface of the third optical fiber.

Accordingly, when a coating of the optical fiber is deformed on the first capstan or the second capstan, a defective portion due to the deformation can be reliably detected.

(7) The optical fiber rewinding machine further includes a temporary hook configured to temporarily suspend the third optical fiber.

Accordingly, the third optical fiber having both sides wound around the first bobbin and the second bobbin can be easily wound around the optical fiber rewinding machine.

Details of Embodiments of Present Disclosure

Hereinafter, specific examples of an optical fiber manufacturing method and an optical fiber rewinding machine according to the present disclosure will be described.

### First Embodiment

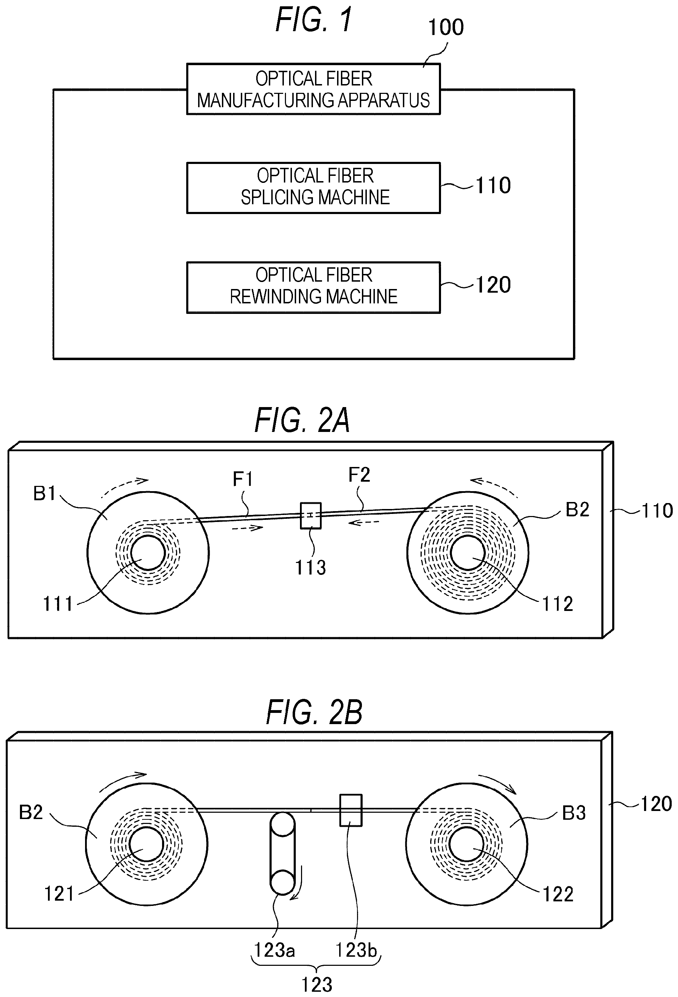

First, an optical fiber manufacturing method according to a first embodiment will be described with reference to FIGS. 1 to 2B.

FIG. 1 is a schematic diagram of an optical fiber manufacturing apparatus according to the first embodiment of the present disclosure, FIG. 2A illustrates an optical fiber splicing machine in FIG. 1 and a fiber splicing step by the optical fiber splicing machine, and FIG. 2B illustrates an optical fiber rewinding machine in FIG. 1 and an optical fiber screening step by the optical fiber rewinding machine.

### <1. Configuration of Optical Fiber Manufacturing Apparatus>

An optical fiber manufacturing apparatus 100 is an apparatus configured to manufacture one optical fiber from two optical fibers. As illustrated in FIG. 1, the optical fiber manufacturing apparatus 100 includes an optical fiber splicing machine 110 configured to splice the two optical fibers, and an optical fiber rewinding machine 120 configured to wind the one optical fiber produced by the optical fiber splicing machine 110 around a prescribed bobbin and inspect the optical fiber.

As illustrated in FIG. 2A, the optical fiber splicing machine 110 includes a first bobbin mounting shaft 111 to which a first bobbin B1 around which a screened first optical fiber F1 is wound is configured to be mounted, a second bobbin mounting shaft 112 to which a second bobbin B2 around which a screened second optical fiber F2 is wound is configured to be mounted, and a fiber splicing unit 113 configured to splice the first optical fiber F1 and the second optical fiber F2.

Screening of the first optical fiber F1 may be to apply tension at an elongation of 1.5% or more and 2.0% or less to the first optical fiber F1. The same applies to screening of the second optical fiber F2.

As illustrated in FIG. 2B, the optical fiber rewinding machine 120 includes a second bobbin mounting shaft 122 to which the first bobbin B1 in a state where the first optical fiber F1 and the second optical fiber F2 are spliced to form a third optical fiber F3 or a third bobbin B3 on which the third optical fiber F3 is wound is configured to be mounted, a first bobbin mounting shaft 121 to which the second bobbin B2 in a state where the first optical fiber F1 and the second optical fiber F2 are spliced to form the third optical fiber F3 is configured to be mounted, and a fiber inspection mechanism 123 that is provided between the first bobbin mounting shaft 121 and the second bobbin mounting shaft 122 and configured to guide the third optical fiber F3 on a path line.

The fiber inspection mechanism 123 includes a screening unit 123a configured to screen the third optical fiber F3, and an unevenness detection unit 123b that is provided downstream of the screening unit 123a and configured to detect an uneven shape on a surface of the third optical fiber F3.

### <2. Optical Fiber Manufacturing Method>

Next, an optical fiber manufacturing method using the optical fiber manufacturing apparatus 100 described above will be described with reference to FIGS. 2A and 2B.

### <2.1 Pre-step>

The first bobbin B1 around which the screened first optical fiber F1 is wound and the second bobbin B2 around which the screened second optical fiber F2 is wound are prepared in advance.

### <2.2. Fiber Splicing Step>

Next, the first bobbin B1 is mounted on the first bobbin mounting shaft 111 of the optical fiber splicing machine 110, and the second bobbin B2 is mounted on the second bobbin mounting shaft 112 of the optical fiber splicing machine 110.

In this state, as illustrated in FIG. 2A, the first optical fiber F1 and the second optical fiber F2 are fed from the first bobbin B1 and the second bobbin B2, respectively, and inserted into the fiber splicing unit 113 of the optical fiber splicing machine 110.

Then, the fiber splicing unit 113 joins an upper port (a tip of the optical fiber on an outer circumferential side of the bobbin) of the first optical fiber F1 and an upper port of the second optical fiber F2 to produce the third optical fiber F3.

### <2.3. Fiber Winding Step>

Next, in a state where the third optical fiber F3 is produced, the first bobbin B1 and the second bobbin B2 are removed from the optical fiber splicing machine 110 and mounted on the optical fiber rewinding machine 120.

Specifically, the first bobbin B1 is mounted on the second bobbin mounting shaft 122 of the optical fiber rewinding machine 120, and the second bobbin B2 is mounted on the first bobbin mounting shaft 121 of the optical fiber rewinding machine 120.

In this state, the first bobbin mounting shaft 121 rotates until the entire third optical fiber F3 is wound around the second bobbin B2.

### <2.4 Screening Step>

Next, the first bobbin B1 is removed from the optical fiber rewinding machine 120, and the empty third bobbin B3 is mounted on the optical fiber rewinding machine 120.

In this state, as illustrated in FIG. 2B, the third optical fiber F3 is fed from the second bobbin B2 to the third bobbin B3, screened by the screening unit 123a of the optical fiber rewinding machine 120, checked by the unevenness detection unit 123b for unevenness on a surface thereof, and wound around the third bobbin B3.

Screening of the third optical fiber F3 may be to apply tension at an elongation of 0.3% or more and 2.0% or less to the third optical fiber F3.

That is, the screening of the third optical fiber F3 may be to apply, to the third optical fiber F3, tension at an elongation equal to or smaller than that when screening the first optical fiber F1 and screening the second optical fiber F2.

The unevenness detection unit 123b may be configured to determine that the surface of the third optical fiber F3 is defective when the amount of unevenness on the surface of the third optical fiber F3 exceeds a prescribed range.

Here, the "prescribed range" may be a range in which the amount of decrease in an outer diameter of the third optical fiber F3 is 30 µm or less and the amount of increase in the outer diameter of the third optical fiber F3 is 50 µm or less.

Further, a winding speed around the third bobbin B3 by the optical fiber rewinding machine 120 may be 300 m/min or more and 2000 m/min or less.

When the winding speed at which the optical fiber is wound around the third bobbin B3 by the optical fiber rewinding machine 120 is lower than 300 m/min, a coating of a splicing portion of the first optical fiber F1 and the second optical fiber F2 is likely to be deformed.

When the winding speed at which the optical fiber is wound around the third bobbin B3 by the optical fiber rewinding machine 120 is faster than 2000 m/min, rewinding time of the third optical fiber F3 for inspecting a defective portion when the unevenness detection unit 123b determines the defective portion becomes long.

### <3. Operational Effects of Present Embodiment>

The optical fiber splicing method executed in this manner includes the fiber splicing step of splicing the first optical fiber F1 and the second optical fiber F2 to produce the third optical fiber F3, the fiber winding step of winding the third optical fiber F3 around the second bobbin B2 by the optical fiber rewinding machine 120, and the screening step of feeding the third optical fiber F3 from the second bobbin B2 by the optical fiber rewinding machine 120, screening the third optical fiber F3, and winding the third optical fiber F3 around the third bobbin B3, and thereby the third optical fiber F3 obtained by splicing the first optical fiber F1 and the second optical fiber F2 is screened. Accordingly, it is possible to efficiently detect a defect of the third optical fiber F3 obtained by splicing the first optical fiber F1 and the second optical fiber F2.

### Second Embodiment

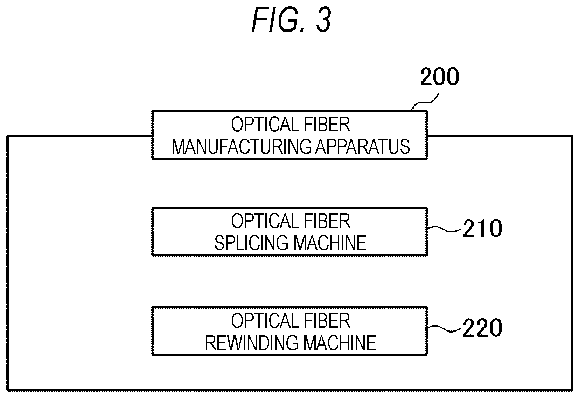

Next, an optical fiber manufacturing method according to a second embodiment will be described with reference to FIGS. 3 to 6.

### <1. Configuration of Optical Fiber Manufacturing Apparatus>

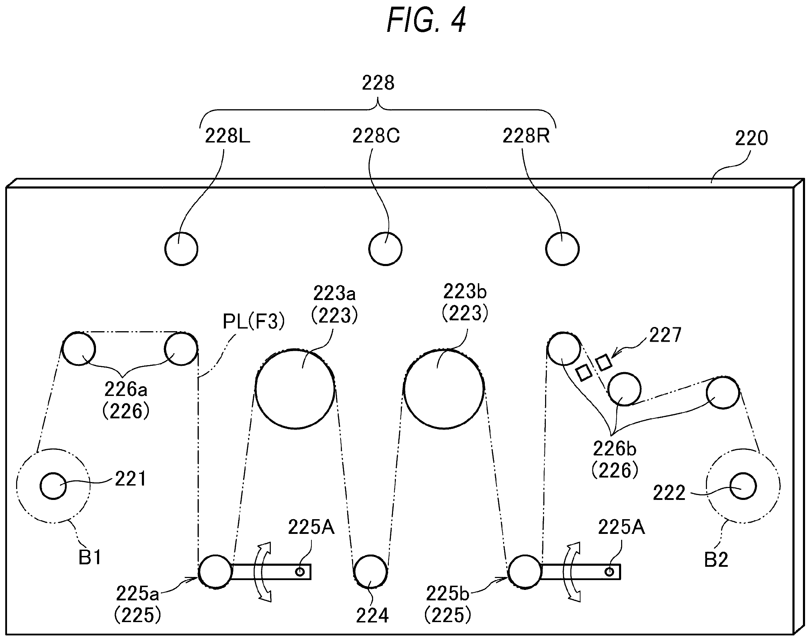

First, an optical fiber manufacturing apparatus 200 used in the optical fiber manufacturing method according to the second embodiment will be described with reference to FIGS. 3 and 4.

FIG. 3 is a schematic diagram of an optical fiber manufacturing apparatus according to the second embodiment of the present disclosure, and FIG. 4 is a schematic view of an optical fiber rewinding machine according to the second embodiment of the present disclosure.

The optical fiber manufacturing apparatus 200 is an apparatus configured to manufacture one optical fiber from two optical fibers. As illustrated in FIG. 3, the optical fiber manufacturing apparatus 200 includes an optical fiber splicing machine 210 configured to splice the two optical fibers, and an optical fiber rewinding machine 220 configured to wind the one optical fiber produced by the optical fiber splicing machine 210 around a prescribed bobbin.

The optical fiber splicing machine 210 is the same as the optical fiber splicing machine 110 according to the first embodiment. Accordingly, detailed description thereof will be omitted and only reference numerals in a 200 range having the same last two digits will be assigned.

As illustrated in FIG. 4, the optical fiber rewinding machine 220 includes a first bobbin mounting shaft 221 to which the first bobbin B1 in a state where the first optical fiber F1 and the second optical fiber F2 are spliced to form the third optical fiber F3 is configured to be mounted, and a second bobbin mounting shaft 222 to which the second bobbin B2 in a state where the first optical fiber F1 and the second optical fiber F2 are spliced to form the third optical fiber F3 is configured to be mounted.

When the first bobbin B1 is mounted on the first bobbin mounting shaft 221 and the second bobbin B2 is mounted on the second bobbin mounting shaft 222, respectively, a path line PL, which is a traveling path of the third optical fiber F3, is formed between the first bobbin mounting shaft 221 and the second bobbin mounting shaft 222.

Provided on the path line PL, as illustrated in FIG. 4, are two capstans 223 configured to apply a prescribed tension to the third optical fiber F3, a screening roller 224 provided between the two capstans 223, dancer rollers 225 configured to absorb fluctuations in speed and tension of the third optical fiber F3, a plurality of guide rollers 226 configured to change a traveling direction of the optical fiber, and an unevenness detection unit 227 configured to detect an uneven shape on a surface of the third optical fiber F3.

As illustrated in FIG. 4, the dancer roller 225 is configured to swing about a swing shaft 225A. One dancer roller 225 is provided upstream of an upstream capstan (first capstan) 223a and one dancer roller 225 is provided downstream of a downstream capstan (second capstan) 223b.

Therefore, the respective dancer rollers 225 are provided upstream and downstream of the screening roller 224.

This makes it possible to stably apply tension to the third optical fiber F3 between the two capstans 223.

As illustrated in FIG. 4, the plurality of guide rollers 226 are provided in a vicinity of the first bobbin B1 mounted on the first bobbin mounting shaft 221 and the second bobbin B2 mounted on the second bobbin mounting shaft 222.

Therefore, as illustrated in FIG. 4, an upstream dancer roller 225a is provided between the upstream capstan 223a and an upstream guide roller 226a, and a downstream dancer roller 225b is provided between the downstream capstan 223b and a downstream guide roller 226b.

As illustrated in FIG. 4, the unevenness detection unit 227 is provided between the downstream guide rollers 226b.

As illustrated in FIG. 4, the optical fiber rewinding machine 220 further includes a plurality of temporary hooks 228 for temporarily suspending the third optical fiber F3.

For example, as illustrated in FIG. 4, three temporary hooks 228 are provided in a horizontal row.

The temporary hook 228 has a smooth surface so as not to damage the third optical fiber F3.

In the optical fiber rewinding machine 220 described above, no roller winds an optical fiber on an entire circumference thereof on the path line PL.

This makes it less likely for the optical fiber to be twisted when the optical fiber is wound around rollers.

In addition, the third optical fiber F3 having both sides wound around the first bobbin B1 and the second bobbin B2 can be easily wound around the rewinding machine 220.

### <2. Optical Fiber Manufacturing Method>

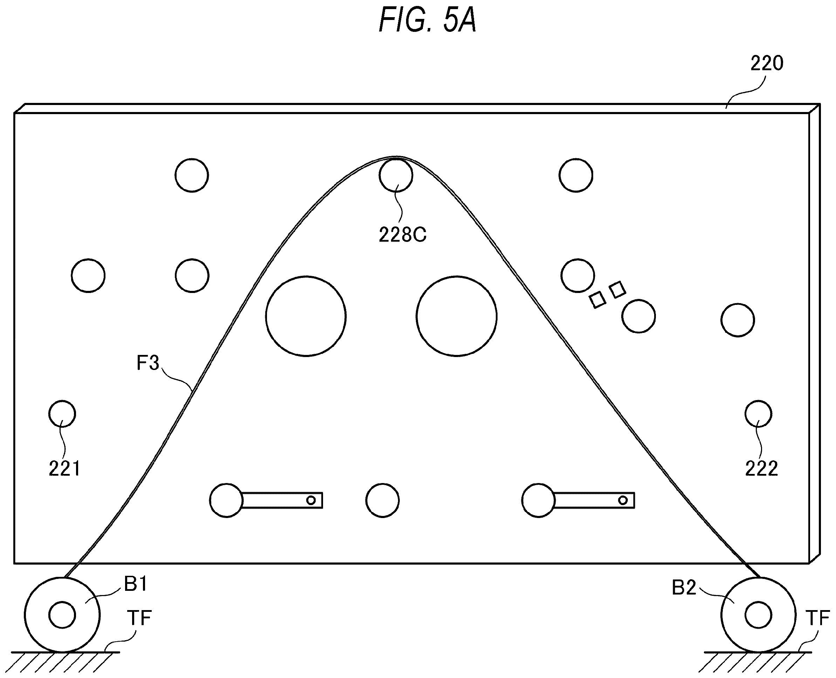

Next, the optical fiber manufacturing method using the optical fiber manufacturing apparatus 200 described above will be described with reference to FIGS. 5A to 6.

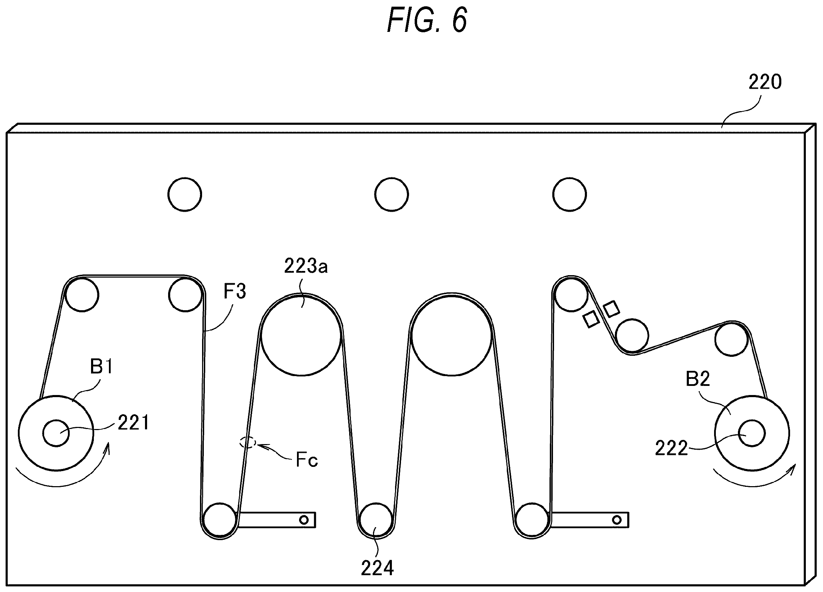

FIGS. 5A to 5F illustrate procedures of suspending an optical fiber in the optical fiber rewinding machine in FIG. 4, and FIG. 6 illustrates a fiber reverse running step.

### <2.1 Pre-step>

Also in the second embodiment, the first bobbin B1 around which the screened first optical fiber F1 is wound and the second bobbin B2 around which the screened second optical fiber F2 is wound are prepared in advance, which is similar to that in the first embodiment.

Screening of the first optical fiber F1 and the second optical fiber F2 may be to apply tension at an elongation of 1.5% or more and 2.0% or less to the first optical fiber F1 and the second optical fiber F2, which is similar to that in the first embodiment.

### <2.2. Fiber Splicing Step>

Next, the first bobbin B1 is mounted on the first bobbin mounting shaft 211 of the optical fiber splicing machine 210, and the second bobbin B2 is mounted on the second bobbin mounting shaft 212 of the optical fiber splicing machine 210.

In this state, the first optical fiber F1 and the second optical fiber F2 are fed and inserted into a fiber splicing unit 213 of the optical fiber splicing machine 210.

Then, the fiber splicing unit 213 joins an upper port of the first optical fiber F1 and an upper port of the second optical fiber F2 to produce the third optical fiber F3.

### <2.3. Bobbin Mounting Step>

Next, in a state where the third optical fiber F3 is produced, the first bobbin B1 and the second bobbin B2 are removed from the optical fiber splicing machine 210 and mounted on the optical fiber rewinding machine 220.

Hereinafter, an example of a bobbin mounting step to the optical fiber rewinding machine 220 will be described.

In the bobbin mounting step, as illustrated in FIG. 5A, first, the third optical fiber F3 is suspended on a central temporary hook 228C in a state where the first bobbin B1 and the second bobbin B2 are placed on a temporary face TF.

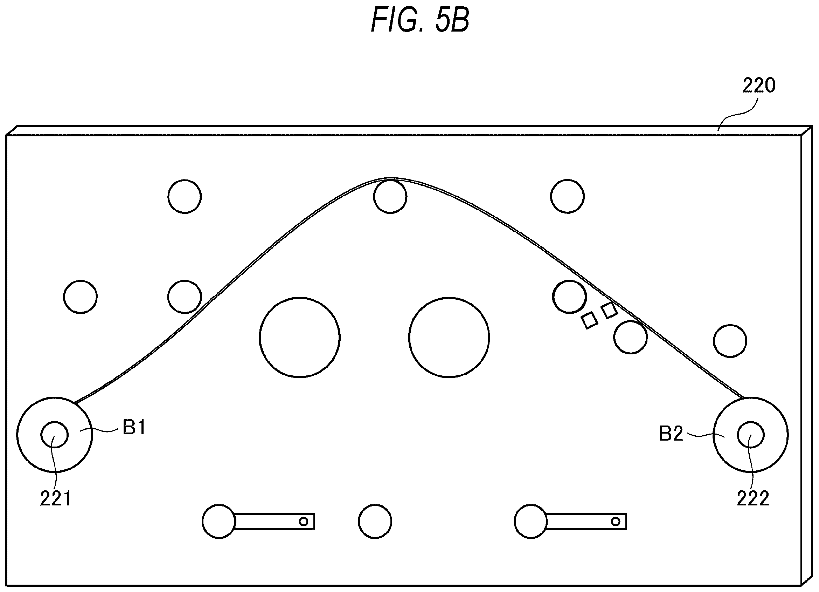

In this state, as illustrated in FIG. 5B, the first bobbin B1 is mounted on the first bobbin mounting shaft 221 of the optical fiber rewinding machine 220, and the second bobbin B2 is mounted on the second bobbin mounting shaft 222 of the optical fiber rewinding machine 220.

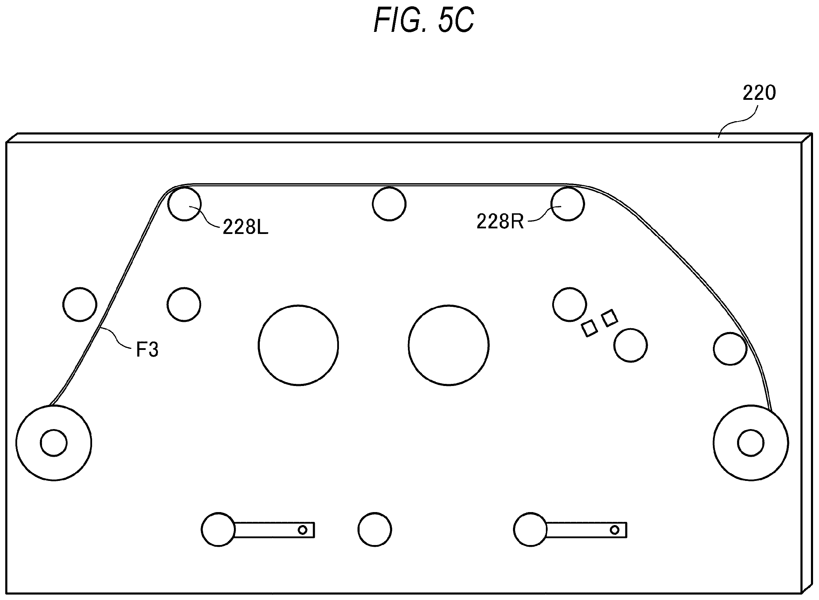

Subsequently, as illustrated in FIG. 5C, the third optical fiber F3 is suspended on a left temporary hook 228L and a right temporary hook 228R.

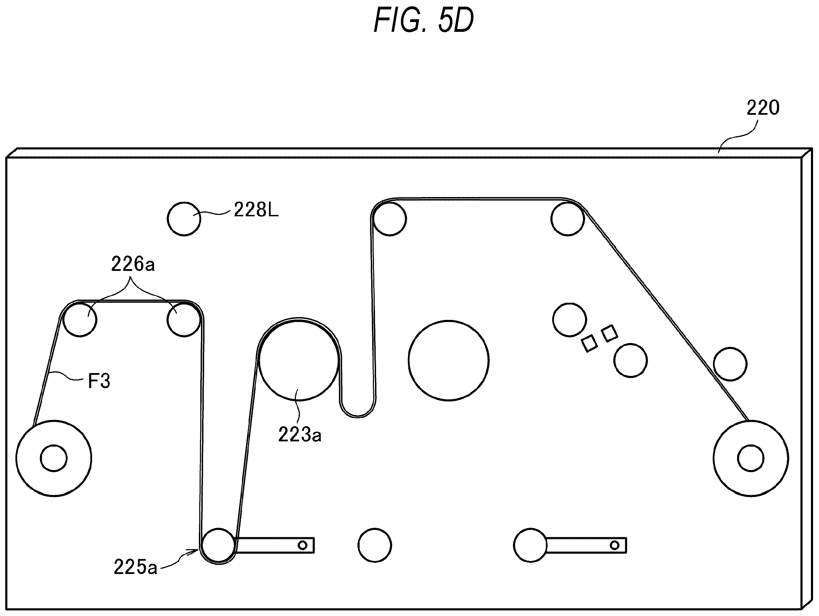

Then, as illustrated in FIG. 5D, the third optical fiber F3 is removed from the left temporary hook 228L, and suspended on the upstream guide roller 226a, the upstream dancer roller 225a, and the upstream capstan 223a in this order.

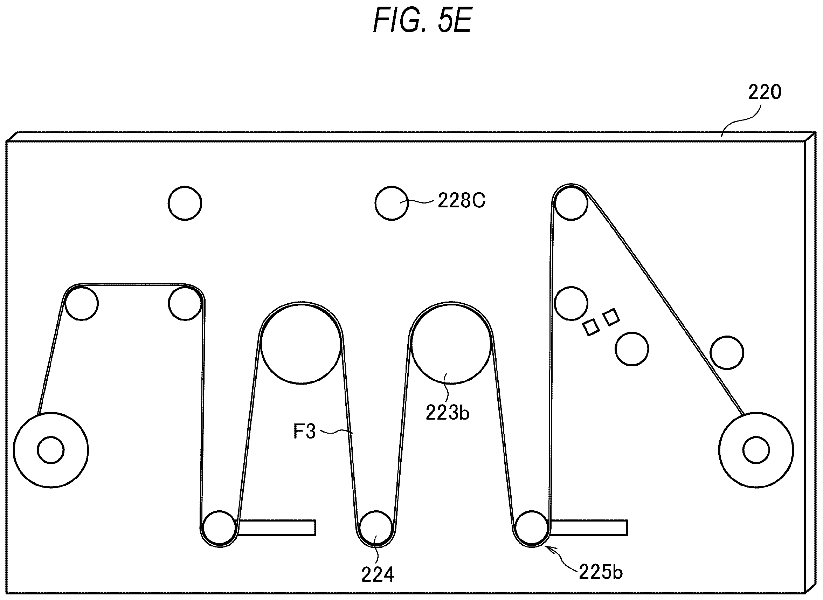

Then, as illustrated in FIG. 5E, the third optical fiber F3 is removed from the central temporary hook 228C, and suspended on the screening roller 224, the downstream capstan 223b, and the downstream dancer roller 225b in this order.

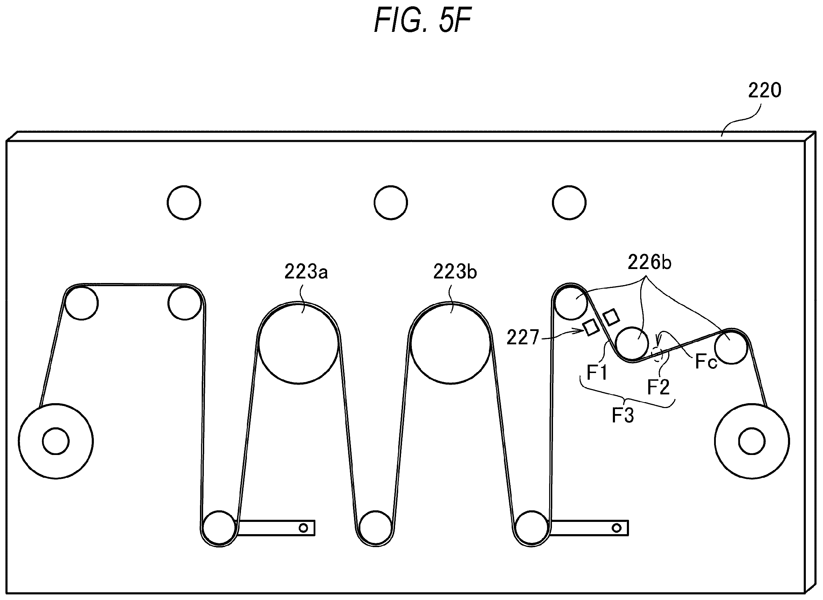

Subsequently, as illustrated in FIG. 5F, the third optical fiber F3 is removed from the right temporary hook 228R, and is suspended on the downstream guide roller 226b while passing through the unevenness detection unit 227.

### <2.4. Fiber Reverse Running Step>

When the third optical fiber F3 is suspended on the optical fiber rewinding machine 220 in this manner, as illustrated in FIG. 5F, a splicing portion Fc of the first optical fiber F1 and the second optical fiber F2 may be located downstream of a section between the upstream capstan 223a and the downstream capstan 223b, which is a section in which screening is executed.

The splicing portion Fc of the first optical fiber F1 and the second optical fiber F2 is a part that is most likely to induce a quality defect as an optical fiber, and it is desired to always inspect the splicing portion Fc of the first optical fiber F1 and the second optical fiber F2.

Therefore, the following fiber reverse running step is performed before the screening step to be described later.

In the fiber reverse running step, as illustrated in FIG. 6, the first bobbin mounting shaft 221 is reversely rotated (that is, rotated in a direction in which the splicing portion Fc approaches the first bobbin B1) to reversely convey the third optical fiber F3, and a part of the third optical fiber F3 is wound around the first bobbin B1.

More specifically, a part of the third optical fiber F3 is wound around the first bobbin B1 until the splicing portion Fc of the first optical fiber F1 and the second optical fiber F2 is located upstream of the upstream capstan 223a.

### <2.5 Screening Step>

After the splicing portion Fc of the first optical fiber F1 and the second optical fiber F2 is returned upstream of the section in which the screening is executed as illustrated in FIG. 6 by the fiber reverse running step, the following screening step is performed.

In the screening step, the third optical fiber F3 is fed from the first bobbin B1 to the second bobbin B2, screened by being applied with a prescribed tension between the upstream capstan 223a and the downstream capstan 223b, checked by the unevenness detection unit 227 for unevenness on a surface of the third optical fiber F3, and wound around the second bobbin B2.

In the screening step, a torque difference is generated between the upstream capstan 223a and the downstream capstan 223b since the tension is applied to the third optical fiber F3.

Screening of the third optical fiber F3 may be to apply tension at an elongation of 0.3% or more and 2.0% or less to the third optical fiber F3.

That is, the screening of the third optical fiber F3 may be to apply, to the third optical fiber F3, tension at an elongation equal to or smaller than that when screening the first optical fiber F1 and screening the second optical fiber F2.

The unevenness detection unit 227 may determine that the surface of the third optical fiber F3 is defective when the amount of unevenness on the surface of the third optical fiber F3 exceeds a prescribed range.

Here, the "prescribed range" may be a range in which the amount of decrease in an outer diameter of the third optical fiber F3 is 30 µm or less and the amount of increase in the outer diameter of the third optical fiber F3 is 50 µm or less.

Further, a winding speed around the second bobbin B2 by the optical fiber rewinding machine 220 may be 300 m/min or more and 2000 m/min or less.

When the winding speed at which the optical fiber is wound around the third bobbin B3 by the optical fiber rewinding machine 220 is lower than 300 m/min, a coating of a splicing portion of the first optical fiber F1 and the second optical fiber F2 is likely to be deformed.

When the winding speed at which the optical fiber is wound around the third bobbin B3 by the optical fiber rewinding machine 220 is higher than 2000 m/min, rewinding time of the third optical fiber F3 for inspecting a defective portion when the unevenness detection unit 227 determines the defective portion becomes long.

### <3. Operational Effects of Present Embodiment>

The optical fiber splicing method executed in this manner includes the fiber splicing step of splicing the first optical fiber F1 and the second optical fiber F2 to produce the third optical fiber F3, and the screening step of feeding the third optical fiber F3 from the first bobbin B1, screening the third optical fiber F3, and winding the third optical fiber F3 around the second bobbin B2, and thereby the third optical fiber F3 obtained by splicing the first optical fiber F1 and the second optical fiber F2 is screened. Accordingly, it is possible to efficiently detect a defect of the third optical fiber F3 obtained by splicing the first optical fiber F1 and the second optical fiber F2.

The optical fiber splicing method further includes the fiber reverse running step of winding the third optical fiber F3 around the first bobbin B1 after the fiber splicing step and before the screening step. Accordingly, a screening range for the third optical fiber F3 is widened, and thus a defect of the third optical fiber F3 can be more easily detected.

Further, in the fiber reverse running step, the third optical fiber F3 is wound around the first bobbin B1 until the splicing portion Fc of the first optical fiber F1 and the second optical fiber F2 is located upstream of the section in which the screening is executed. Accordingly, the splicing portion Fc of the first optical fiber F1 and the second optical fiber F2 that is most likely to be a defective portion is always screened, and thus a defect of the third optical fiber F3 can be reliably detected.

Further, the optical fiber rewinding machine according to the present embodiment includes the upstream capstan 223a, which is the first capstan provided on the path line PL of the third optical fiber F3 formed between the first bobbin mounting shaft 221 and the second bobbin mounting shaft 222, and the downstream capstan 223b, which is the second capstan provided downstream of the upstream capstan 223a on the path line PL. Accordingly, the third optical fiber F3 obtained by splicing the first optical fiber F1 and the second optical fiber F2 is screened by being applied with the prescribed tension between the first capstan and the second capstan, and thus the defect of the third optical fiber F3 obtained by splicing the first optical fiber F1 and the second optical fiber F2 can be detected.

### Modifications

Although embodiments of the present disclosure are described above, the present disclosure is not limited thereto.

Elements provided in the embodiments described above can be combined as long as it is technically possible, and a combination thereof is also included in the scope of the present disclosure as long as the features of the present disclosure are included.

For example, three temporary hooks are provided in the second embodiment described above, but the number of temporary hooks to be provided is not limited to three.

The temporary hook may have an L shape in a side view to prevent the optical fiber from falling off.

### REFERENCE SIGNS LIST

100 optical fiber manufacturing apparatus
110 optical fiber splicing machine
111 first bobbin mounting shaft
112 second bobbin mounting shaft
113 fiber splicing unit
120 optical fiber rewinding machine
121 first bobbin mounting shaft
122 second bobbin mounting shaft
123 fiber inspection mechanism
123a screening unit
123b unevenness detection unit
200 optical fiber manufacturing apparatus
210 optical fiber splicing machine
211 first bobbin mounting shaft
212 second bobbin mounting shaft
220 optical fiber rewinding machine
221 first bobbin mounting shaft
222 second bobbin mounting shaft
223 capstan
223a upstream capstan (first capstan)
223b downstream capstan (second capstan)
224 screening roller
225 dancer roller
225A swing shaft
225a upstream dancer roller
225b downstream dancer roller
226 guide roller
226a upstream guide roller
226b downstream guide roller
227 unevenness detection unit
228 temporary hook
228L left temporary hook
228C central temporary hook
228R right temporary hook
B1 first bobbin
B2 second bobbin
B3 third bobbin
F1 first optical fiber
F2 second optical fiber
F3 third optical fiber
Fc splicing portion
PL path line
TF temporary face

## Claims

1. An optical fiber manufacturing method comprising:
a fiber splicing step of splicing a first optical fiber wound around a first bobbin and a second optical fiber wound around a second bobbin to produce a third optical fiber;
a fiber winding step of winding the third optical fiber around the second bobbin, in an optical fiber rewinding machine; and
a screening step of feeding the third optical fiber from the second bobbin, screening the third optical fiber, and winding the third optical fiber around a third bobbin, in the optical fiber rewinding machine.

2. An optical fiber manufacturing method comprising:
a fiber splicing step of splicing a first optical fiber wound around a first bobbin and a second optical fiber wound around a second bobbin to produce a third optical fiber; and
a screening step of feeding the third optical fiber from the first bobbin, screening the third optical fiber, and winding the third optical fiber around the second bobbin.

3. The optical fiber manufacturing method according to claim 2, further comprising
a fiber reverse running step of winding the third optical fiber around the first bobbin, after the fiber splicing step and before the screening step.

4. The optical fiber manufacturing method according to claim 3,
wherein in the fiber reverse running step, the third optical fiber is wound around the first bobbin until a splicing portion of the first optical fiber and the second optical fiber is located closer to the first bobbin than to a section in which screening is executed.

5. An optical fiber rewinding machine for winding, around a second bobbin, a third optical fiber obtained by splicing a screened first optical fiber wound around a first bobbin and a screened second optical fiber wound around the second bobbin,
the optical fiber rewinding machine comprising:
a first bobbin mounting shaft to which the first bobbin is configured to be mounted;
a second bobbin mounting shaft to which the second bobbin is configured to be mounted;
a first capstan provided on a path line of the third optical fiber, the path line being formed between the first bobbin mounting shaft and the second bobbin mounting shaft; and
a second capstan provided on the path line and downstream of the first capstan.

6. The optical fiber rewinding machine according to claim 5, further comprising:
an unevenness detection unit provided downstream of the second capstan and configured to detect an uneven shape on a surface of the third optical fiber.

7. The optical fiber rewinding machine according to claim 5 or 6, further comprising:
a temporary hook configured to temporarily suspend the third optical fiber.
